# EUROPEAN PATENT APPLICATION

(11) **EP 4 411 159 A1**
(43) Date of publication of application: **07.08.2024**
(21) Application number: 22944566.3
(22) Date of filing: 29.09.2022
(51) Int. Cl.: F16C 33/46, F16C 33/66

(54) **CAGE AND BEARING**

(30) Priority: 31.05.2022 CN 202210610614
(71) Applicant: Beijing Goldwind Science & Creation Windpower Equipment Co. Ltd., Beijing 100176 (CN)
(72) Inventor: CHI, Haifeng, Beijing 100176 (CN); LIU, Dongxu, Beijing 100176 (CN); LI, Huixun, Beijing 100176 (CN); WANG, Mingwei, Beijing 100176 (CN)
(74) Representative: Hoffmann Eitle
(86) International application number: PCT/CN2022/122684
(87) International publication number: WO 2023/231258

(57) **Abstract**

The present application discloses a retainer and a bearing. The retainer includes a first ring and a second ring, as well as multiple beams connecting the first ring and the second ring. The multiple beams are spaced apart from each other in a circumferential direction of the retainer and a pocket for accommodating a rolling element of a bearing is defined between adjacent beams. The side surface of the beam in the circumferential direction includes a first pressure slope and a second pressure slope spaced apart from each other, and a recessed surface provided at one or two ends of the pocket of the retainer and extending from the first pressure slope towards a longitudinal centerline of the beam and towards a longitudinal end of the beam. The retainer facilitates bearing assembling, avoids the use of large instruments during the assembling, and reduces damage to various components of the bearing during the assembling.

## Description

### CROSS-REFERENCE OF RELATED APPLICATOINS

The present application claims the priority of the Chinese patent application No.202210610614.6 entitled "Retainer and Bearing" submitted to the China National Intellectual Property Administration of the People's Republic of China on May 31, 2022, which is incorporated herein in its entirety by reference.

### TECHNICAL FIELD

The present application relates to the field of bearings, especially bearings used in the wind power industry and retainers used in bearings.

### BACKGROUND

With the rapid development of the wind power industry, increasing power and improving efficiency are the main performance pursued by wind turbines. The development of matching bearings with large size, large load, light weight, smooth operation, and low cost is the goal pursued by the wind power bearing industry. Large bearings (especially single row tapered-roller bearings) are the current development trend, and the design, processing, and high cost of retainer structure are the bottleneck that constrain the performance of wind power tapered-roller bearings. In order to meet the high-performance requirement of fan bearings, it is urgent to study a special structure of tapered-roller bearing retainer to achieve this high-performance requirement.

Due to the excessive size of large tapered-roller bearings, during the assembling of the bearings, it is difficult to use large retainer shrinkage molds and large press machines for bearing assembly. For example, traditionally, in order to solve the problem of assembly equipment, the retainer can be cut open first, then the rollers and inner rings can be installed, and then the cut part can be welded in the circumferential direction of the retainer. However, this poses a risk of weak points in the strength of the retainer. In addition, it is also required that the welding deformation of the retainer is relatively small, making the process more difficult. In addition, the material also needs to have weldability, so the hardness of the retainer material will not be too high, making the retainer prone to deformation.

### SUMMARY

Therefore, the present application aims to solve the above or other problems existing in the prior art.

In an aspect, the present application provides a retainer that facilitates bearing assembling, avoids the use of large instruments (such as large retainer shrink molds, large press machines for bearing assembling) during the assembling, and reduces damage to various components (especially the retainer, the rolling element, the bearing inner ring, etc.) of the bearing during the assembling.

In another aspect, the present application provides a retainer suitable for a bearing assembling method combining prying installation and hot installation.

According to one aspect of the present application, the present application provides a retainer including a first ring and a second ring, as well as multiple beams connecting the first ring and the second ring. The multiple beams are spaced apart from each other in a circumferential direction of the retainer and a pocket for accommodating a rolling element of a bearing is defined between adjacent beams, wherein a side surface of the beam in the circumferential direction includes a first pressure slope and a second pressure slope spaced apart from each other, as well as a recessed surface provided at one or two ends of the pocket, and the recessed surface extends from the first pressure slope towards a longitudinal centerline of the beam and towards a longitudinal end of the beam.

The retainer used in the present application ensures the smooth operation of the rolling element, ensures the righting effect of the pocket of the retainer on the rolling element, and reduces the wear or premature failure of the pressure slope of the retainer; Moreover, it is beneficial to increase the height of the blocking edge of the bearing inner ring, avoiding the phenomenon of the rolling element falling off due to the limited height of the blocking edge during the bearing assembling (traditionally, the height of the blocking edge of the bearing inner ring cannot be too large, otherwise the bearing inner ring will not be able to be smoothly installed). Furthermore, the increase in the height of the blocking edge helps to enhance the righting effect of the blocking edge on the rolling element.

Optionally, the recessed surface can be formed as a dovetail groove extending in an inclined plane from the first pressure slope towards the longitudinal centerline of the beam and towards the longitudinal end of the beam.

Optionally, the recessed surface can be formed as a rectangular groove that sinks towards the longitudinal centerline of the beam relative to the first pressure slope.

Optionally, the side surface may further include a transition slope, which can extend from the first and second pressure slopes in the radial direction of the retainer.

Optionally, the pocket may include a small end of the pocket and a large end of the pocket. At the small end of the pocket, the side surface may include a recessed surface extending from the first pressure slope towards the longitudinal centerline of the beam and towards the longitudinal end of the beam.

Optionally, the side surface may further include a sinking surface located between the first and second pressure slopes and recessed relative to the first and second pressure slopes. The retainer of the present application is disposed in this way, which can provide sufficient bearing lubrication and avoid damage to the operation surface of the rolling element by the retainer.

To further enhance the reliability of bearing lubrication, optionally, the side surface may further include a first oil groove surface extending from the recessed surface at one end of the pocket, and/or a second oil groove surface extending from the second pressure slope at the other end of the pocket.

Optionally, the offset distance between the center of the sinking surface in the longitudinal direction of the beam and the center of the beam in the longitudinal direction can be within 20% of the longitudinal length of the beam.

Optionally, the length of the recessed surface in the longitudinal direction of the beam can be 1/6 to 1/2 of the longitudinal length of the beam.

Optionally, the length of the first pressure slope and/or the second pressure slope in the longitudinal direction of the beam may be greater than 1/6 of the longitudinal length of the beam.

Optionally, the retainer can be an integrally-formed retainer.

In another aspect, the present application provides a bearing including an outer ring, an inner ring, and a retainer as described above which is configured to hold a rolling element located between the inner ring and the outer ring.

### BRIEF DESCRIPTION OF THE DRAWINGS

Fig. 1 is a schematic cross-sectional view of a tapered-roller bearing according to an embodiment of the present application;
Fig. 2 is a stereoscopic view of a retainer according to an embodiment of the present application;
Fig. 3 is a partial cross-sectional view of the retainer according to an embodiment of the present application;
Fig. 4 is a partial stereoscopic view of the retainer viewed from the radial inner side according to an embodiment of the present application;
Fig. 5 is a partial stereoscopic view of the retainer when viewed from the radial outer side according to an embodiment of the present application;
Fig. 6 is a partial cross-sectional view of the retainer and the rolling element according to an embodiment of the present application, showing the original position of the retainer and the expansion position after heating, as well as the original position of the rolling element, the radial movement position after heating, and the position where the rolling element is further radially lifted outward by prying;
Fig. 7 is a partial enlarged view of part I in Fig. 6, where for clarity, only the retainer is shown without the rolling element; and
Fig. 8 is a partially enlarged view of part J in Fig. 6.

Explanation of the reference signs:
1- Outer ring; 2- Retainer; 3- Inner ring; 4- Rolling element; 5- First ring; 6-Second ring; 7-Beam; 10- Pocket; 11- First oil groove surface; 12-Recessed surface; 13- First pressure slope; 14- Sinking surface; 15- Second pressure slope; 16- Second oil groove surface; 17- Turning part; 18- Transition slope; 31- Blocking edge; C0- Original position of the retainer; C1- Thermal expansion position of the retainer; R0- Original position of the rolling element; R1- Thermal expansion position of the rolling element; R2- Prying and lifting position of the rolling element.

### DETAILED DESCRIPTION

The following will provide a detailed description of the features and exemplary embodiments of various aspects of the present application. In the detailed description below, many specific details are proposed to provide a comprehensive understanding of the present application. However, it is evident to those skilled in the art that the present application can be implemented without the need for some of these specific details. The description of the embodiments below is only intended to provide a better understanding of the present application by showing examples of the present application. In the accompanying drawings and the following description, at least some well-known structures and techniques are not shown in order to avoid unnecessary ambiguity to the present application. Moreover, for clarity, the dimensions of some structures may have been exaggerated. In addition, the features, the structures, or the characteristics described below can be combined in one or more embodiments in any suitable manner.

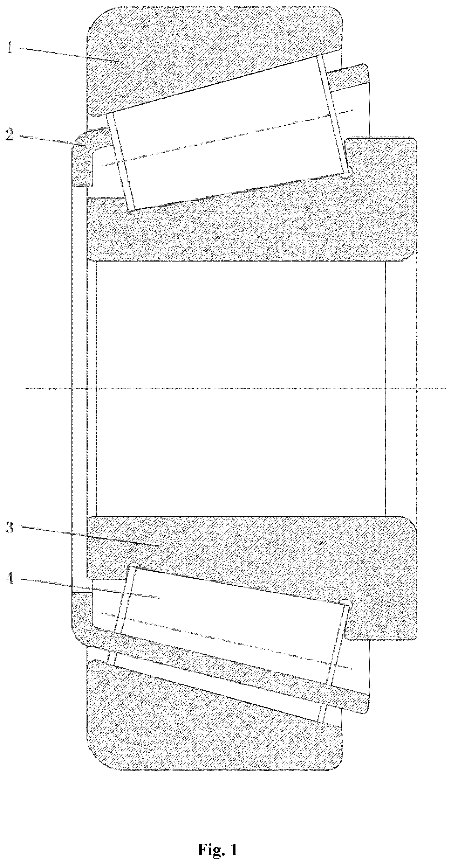

As shown in Fig. 1, the bearing includes an outer ring 1, an inner ring 3, a rolling element 4 arranged between the outer ring 1 and the inner ring 3, and a retainer 2 for holding and guiding the rolling element 4. Here, a single row tapered-roller bearing is used as an example to describe the present application, but the type of bearing applicable to the present application are not limited to this. In the case of a tapered-roller bearing, the rolling element 4 is a tapered-roller.

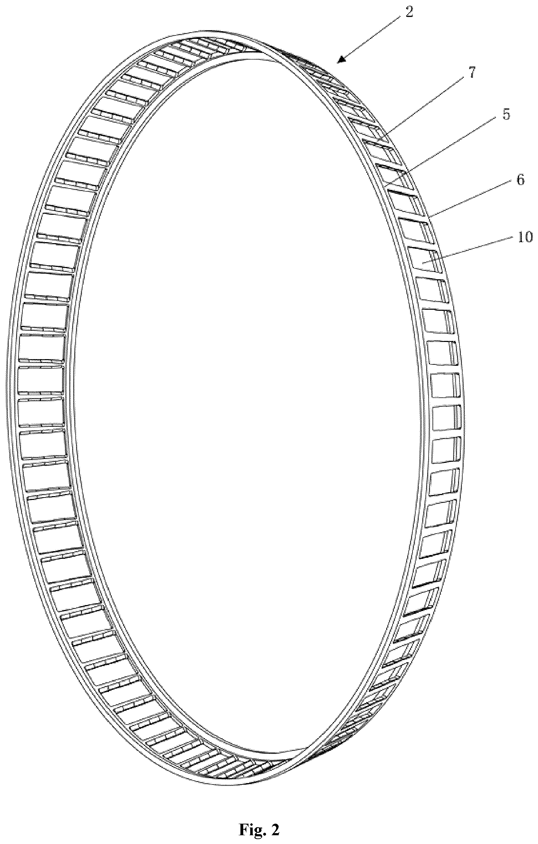

Fig. 2 shows a stereoscopic view of the retainer. As shown in Fig. 2, the retainer 2 includes a first ring 5 and a second ring 6, as well as multiple beams 7 connecting the first ring 5 and the second ring 6. The beams 7 are spaced apart from each other in the circumferential direction of the retainer 2 and a pocket 10 for accommodating a rolling element of the bearing is defined between adjacent beams 7. It can be seen that the retainer 2 is a frame type retainer or a closed type retainer. In the case of a tapered-roller bearing, the diameter of the first ring 5 of the retainer 2 is greater than the diameter of the second ring 6, and the pocket 10 has a large end and a small end, respectively, adapted to the large end and the small end of the rolling element 4 accommodated in the pocket 10.

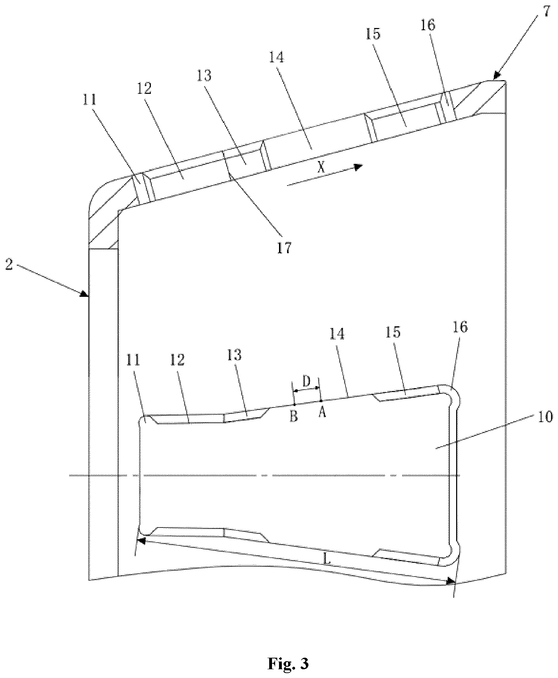

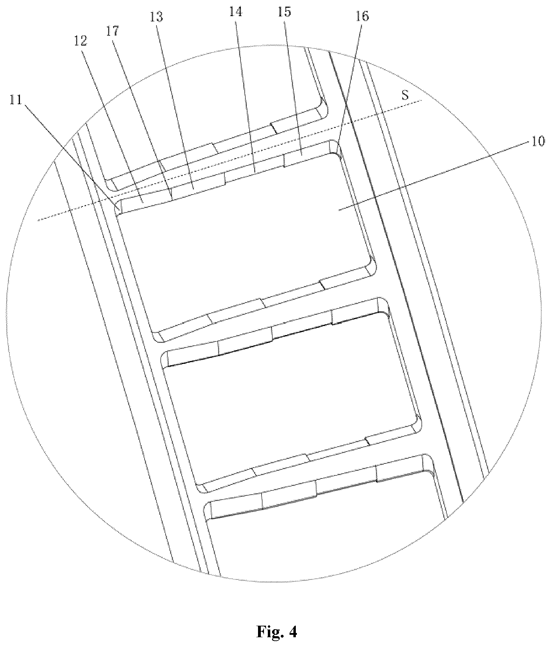

As shown in Figs. 3 and 4, the side surface of the beam 7 of the retainer 2 according to the present application in the circumferential direction (taking one of the side surfaces as an example) includes a first pressure slope 13 and a second pressure slope 15 spaced apart from each other. The pressure slope refers to the surface where the retainer contacts the rolling element, guiding the retainer in the load zone and guiding the rolling element in the non-load zone. Preferably, the pressure slope can be in tangential contact with the rolling element, in other words, the pressure slope is the tangent surface where the rolling element contacts the beam of the retainer. Due to the use of two-section pressure slope in the longitudinal direction X of beam 7 (as shown in Fig. 3), the retainer 2 can contact the rolling element over a larger span, ensuring smoother operation of the rolling element and reducing noise.

In addition, the side surface of the beam 7 of the retainer 2 further includes a recessed surface 12 provided at one or two ends of the pocket 10. The recessed surface 12 extends from the first pressure slope 13 towards the longitudinal centerline S of beam 7 (as shown in Fig. 4) and towards the longitudinal end of the beam 7.

More preferably, as shown in Figs. 3 and 4, at the small end of the pocket, the side surface of the retainer 2 in the circumferential direction includes a recessed surface 12 extending from the first pressure slope 13 towards the longitudinal centerline S of the beam 7 and towards the longitudinal end of the beam. The recessed surface 12 can be formed as a groove extending from the first pressure slope 13 away from the interior of the pocket and towards the longitudinal centerline S of the beam 7.

More specifically, as shown in Fig. 4, the recessed surface 12 can be formed as a dovetail groove extending in an inclined plane from the first pressure slope 13 towards the longitudinal centerline S of the beam 7 and towards the longitudinal end of the beam 7. Here, the plane of the recessed surface 12 (such as the dovetail groove) is not coplanar with the plane of first pressure slope 13. The plane of the recessed surface 12 is further away from the interior of the pocket and closer to the longitudinal centerline S of the beam 7 relative to the first pressure slope 13. For example, as shown in Fig. 3, the recessed surface 12 extends towards the longitudinal end of the beam 7 at the turning part 17 between the first pressure slope 13 and the recessed surface 12.

The recessed surface 12 is not in contact with the rolling element 4. The recessed surface 12 is further away from the rolling element 4 relative to the first pressure slope 13, causing the radial movement amount or the radial outward displacement amount of the rolling element 4 within the pocket 10 (especially at the small end of the pocket) to be greater, thereby increasing the diameter of the inner pitch circle at the small end of the rolling element (i.e., the diameter of the circle formed by the connecting line of the points closest to the radial interior at the small end, of all rolling elements in the rolling element column).

In addition, the recessed surface 12 can also be formed as a rectangular groove that sinks relative to the first pressure slope 13 toward the longitudinal centerline S of the beam 7 of the retainer 2. Of course, the present application is not limited to this. The recessed surface 12 can also be any other shape of the recessed surface or the groove that is not coplanar with the first pressure slope 13, is not in contact with the rolling element 4, and is further away from the rolling element 4 relative to the first pressure slope 13 to ensure that the rolling element 4 has increased radial movement amount in the pocket10.

By using a two-section pressure slope, the retainer can contact the rolling element in a longitudinal direction over a larger span, ensuring smoother operation of the retainer and reducing noise.

In addition, by disposing a recessed surface further away from the rolling element relative to the pressure slope at one or ends of the pocket (preferably at the small end of the pocket), this allows for the assembly of the retainer and the bearing inner ring by prying. More specifically, during the prying process, when the inner ring of the bearing enters the components of the retainer and the rolling element, the small end of the retainer is used as the fulcrum to pry the small blocking edge of the inner ring. Due to the existence of this recessed surface, the small end of the rolling element can move radially outward, thereby increasing the diameter of the inner pitch circle of the rolling element, making space for the small blocking edge of the bearing inner ring so that the bearing inner ring is installed on the radial inner side of the retainer and the small blocking edge of the bearing inner ring abuts against the end surface of the rolling element.

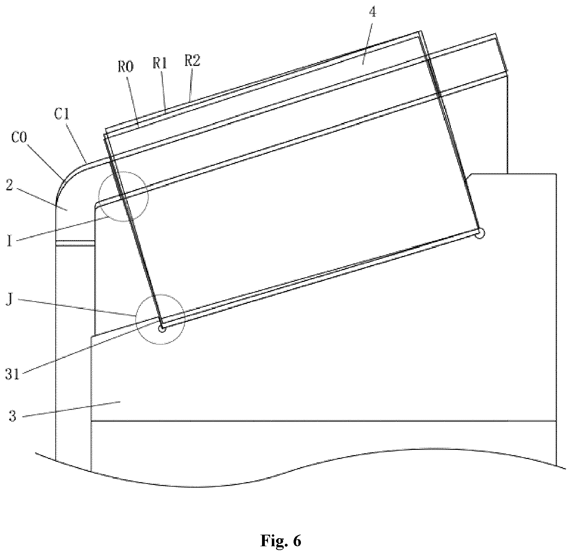

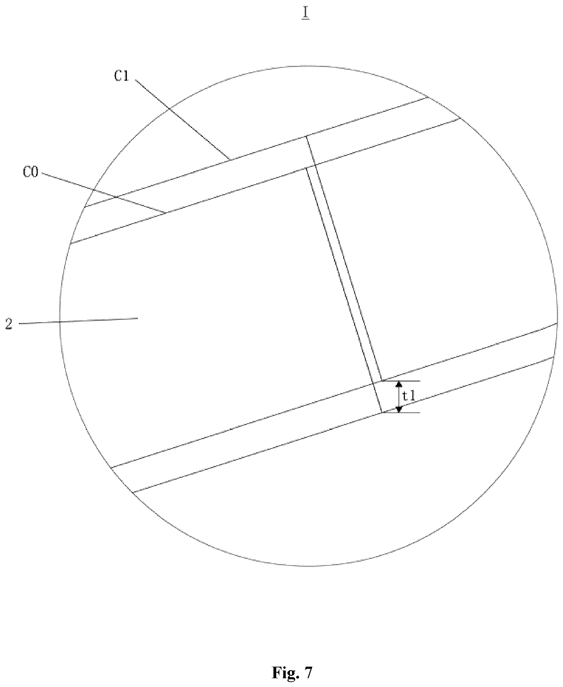

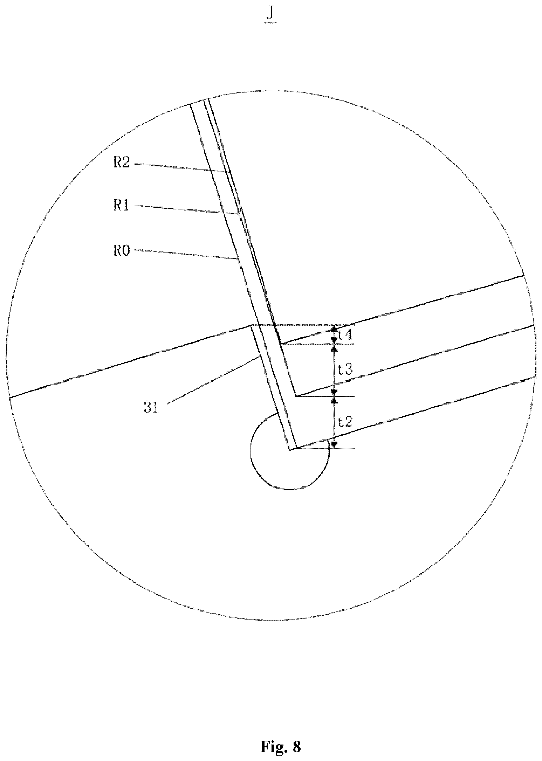

In addition, the presence of the recessed surface 12 can further increase the height of the blocking edge of the bearing inner ring. As described with reference to Figs. 6 to 8, Fig. 6 shows the original position C0 of the retainer and the thermal expansion position C 1 of the retainer after heating. It also shows the original position R0 of the rolling element located in the pocket 10 of the retainer 2, the thermal expansion position R1 of the rolling element moving radial outward after heating, and the prying and lifting position R2 of the rolling element moving further radial outward during prying due to the presence of the recessed surface 12. Fig. 7 shows a partially enlarged view of part I of Fig. 6 (for clarity, only the retainer 2 is shown, and the rolling element 4 is not shown), which shows the thermal expansion amount t1 of the retainer 2 from the original position C0 of the retainer to the thermal expansion position C1 of the retainer in the radial direction. Fig. 8 shows a partially enlarged view of part J of Fig. 6, showing the radial movement amount t2 in the pocket caused by heating from the original position R0 of the rolling element to the thermal expansion position R1 of the rolling element, and the radial lifting amount t3 from the thermal expansion position R1 of the rolling element to the prying and lifting position R2 of the rolling element. From this, it can be seen that the radial height of the blocking edge 31 of the bearing inner ring used to abut against the inner edge of the rolling element 4 can be t1+t2+t3+t4+r0, where t4 represents the interference locking amount of the blocking edge of the inner ring relative to the rolling element in the radial direction, and r0 represents the radius of the axial end chamfer of the rolling element. It can be seen that the structure of the above-mentioned retainer proposed in the present application is particularly suitable for the combination of hot installation and prying installation. Compared with simple hot installation, the presence of the recessed surface 12 (the presence of the radial lifting amount t3) helps to increase the height of blocking edge 31, effectively avoiding the problem of the rolling element being prone to falling off due to the fact that the height of the blocking edge is limited (for example, limited by limitations of material expansion) such that the height of the blocking edge cannot be too large. Compared with simple prying installation, the thermal deformation at the small end of the retainer helps to increase the height of the blocking edge 31 and effectively avoids the problem of the rolling element falling off, thereby improving the stability of the bearing with the retainer.

In addition, the increase in the height of the blocking edge 31 improves the righting effect of the blocking edge 31 on the rolling element, ensuring smooth operation of the rolling element.

In addition, due to the fact that the retainer with the above structure is particularly suitable for the bearing assembling way of the combination of prying installation and hot installation, there is no need to cut the retainer and then weld the retainer during the assembling. Therefore, it is particularly preferred that the retainer in the present application can be an integrally-formed retainer.

In addition, the side surface of the beam 7 of the retainer 2 may further include a sinking surface 14 located between the first pressure slope 13 and the second pressure slope 15, and recessed relative to the first pressure slope 13 and the second pressure slope 15. Preferably, the sinking surface 14 may be parallel to the first pressure slope 13 and/or the second pressure slope 15. The sinking surface 14 does not come into contact with the rolling element 4.

In addition, the side surface of the beam 7 of the retainer 2 may further include a first oil groove surface 11 extending from the recessed surface 12 at one end of the pocket 10 and/or a second oil groove surface 16 extending from second pressure slope 15 at the other end of the pocket 10. Here, in the unstable state of the retainer, the four corners of the first oil groove surface 11 and the second oil groove surface 16 that maintain the pocket 10 do not interfere with the chamfer of the rolling element 4.

In addition, the presence of the above-mentioned sinking surface 14 and the oil groove surfaces 11 and 16 allows for the storage of a large amount of lubricating grease, which is conducive to the discharge of lubricating grease and waste grease for lubricating the rolling element and the retainer.

For the beam of the retainer with the above structure, the distribution of the first pressure slope 13, the second pressure slope 15, the recessed surface 12, and the sinking surface 14, as well as the proportion or the length between them, are also crucial.

For example, as shown in Fig. 3, the offset distance D between the center A of the sinking surface 14 located between the first pressure slope 13 and the second pressure slope 15 in the longitudinal direction X of the beam 7 and the center B of the beam 7 in the longitudinal direction X can be within 20% of the longitudinal length L of the beam 7, preferably within 10% of the longitudinal length L of the beam 7, and more preferably, within 10mm. Among them, the longitudinal length L of the beam 7 is the distance between the two ends of the beam 7 in the longitudinal direction that define the edge of the pocket, thus the longitudinal length L can also correspond to the longitudinal length of the pocket 10 at the beam 7. For the sake of clarity, Fig. 3 exaggerates the offset distance D between A and B, and the scale shown is not intended to define the actual range of the offset distance D. That is to say, it is best to dispose the sinking surface 14 in the middle part of the beam in the longitudinal direction, which corresponds to the middle part of the pocket in the longitudinal direction. This is because most of the operation conditions when the rolling element contacts the raceway of the bearing inner ring and the bearing outer ring are in middle contact, and the rolling element should guides the retainer to avoid the functional surface of the rolling element (i.e., the middle part of the rolling element).

Furthermore, the length of the recessed surface 12 in the longitudinal direction X of the beam 7 is preferably 1/6 to 1/2 of the longitudinal length L of the beam 7. If the length of the recessed surface 12 is short, it will be difficult to pry. If the length of the recessed surface 12 is long, it will affect the length of the pressure slope, which cannot ensure the smooth operation of the rolling element or the righting effect of the pocket of the retainer on the rolling element.

In addition, the length of the first pressure slope 13 and/or the second pressure slope 15 in the longitudinal direction X of the beam 7 is preferably greater than 1/6 of the longitudinal length L of the beam to ensure sufficient area for guiding the rolling element. Preferably, the length of the first pressure slope 13 and/or the second pressure slope 15 may be greater than 10mm, or 1/6 to 1/5 of the longitudinal length L of the beam.

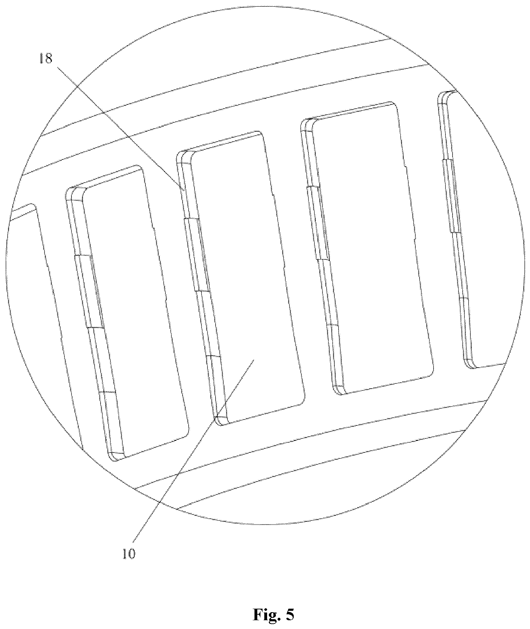

In addition, the pressure slope of the beam of the retainer is described above, but the side surface of the beam of the retainer can further include a transition slope or an unpressed slope. Fig. 5 shows a local stereoscopic view of the retainer when viewed from the radial outer side of the retainer. The transition slope 18 can extend radially outward from the pressure slope (i.e., the first and second pressure slopes) in the radial direction of the retainer, and the transition slope does not come into contact with the rolling element. Of course, the present application is not limited to this. The retainer can also exclude such transitional slope or unpressed slope.

The following assembly method can be used for the bearing using the retainer provided in the above embodiment. Referring to Fig. 6, the rolling element 4 is installed in the retainer 2, and the rolling element 4 and the retainer 2 are heated to expand. The retainer 2 expands radially outward from the original position C0 to the thermal expansion position C1, and the rolling element 4 expands or moves radially outward from the original position R0 to the thermal expansion position R1. At this time, the bearing inner ring 3 can be tilted relative to the longitudinal axis of the inner ring and introduced into the radial inner side of the retainer 2. Firstly, a part of the blocking edge 31 of the bearing inner ring 3 abuts against the end surface of the rolling element 4. Then, the other part of the blocking edge 31 that has not entered is pried (the small end of the rolling element 4 is used as the fulcrum to pry the blocking edge). At this time, due to the presence of the recessed surface 12, the rolling element 4 can further move radially outward to the prying and lifting position R2 by prying to make space for the blocking edge 31 of the bearing inner ring 3, so that the part of the blocking edge 31 that has not entered can smoothly catch the end surface of the rolling element 4, thereby completing the assembling of the retainer 2, the rolling element 4, and the inner ring 3. Here, only the assembling among the retainer 2, the rolling element 4, and the inner ring 3 is described in detail, and the assembling process of the outer ring is not described in detail. The outer ring can be installed on the radial outer side of the retainer 2 therebefore or thereafter.

Therefore, the above retainer structure is particularly suitable for the bearing assembling methods of the combination of prying installation and hot installation, which is particularly advantageous for large bearings (especially tapered-roller bearings) in the wind power industry. Therefore, there is no need to use large retainer shrinkage molds and large pressure machines for bearing assembling, solving the problem of the retainer lacking extension tooling and lacking shrinkage mold tooling during assembly, and solving the problem of lacking large pressure machines during bearing assembly.

In addition, there is no need to cut open and weld the retainer first, thereby ensuring the strength of the retainer.

In addition, the problem of the rolling element falling during hot installation has been solved, and the problem of scratching the small end of the rolling element during prying installation has been solved.

In addition, disposing a sinking surface solves the problem of poor lubrication of the rolling element and avoids damage to the operating surface of the rolling element by the retainer.

In addition, the two-section slope makes the rolling element operate more smoothly in the retainer, enhancing the righting effect of the retainer on the rolling element. In addition, the height of the blocking edge of the inner ring is enhanced and the righting effect of the blocking edge on the rolling element is further enhanced.

The specific implementation methods of the present application have been described in detail above. Although some embodiments have been expressed and described, those skilled in the art should understand that without departing from the principles and spirit of the present application, which is defined by the claims and their equivalents, these embodiments can be modified and improved, and these modifications and improvements should also be within the scope of protection of the present application.

## Claims

1. A retainer comprising a first ring (5) and a second ring (6), as well as multiple beams (7) connecting the first ring (5) and the second ring (6), wherein the multiple beams (7) are spaced apart from each other in a circumferential direction of the retainer, and a pocket (10) for accommodating a rolling element of a bearing is defined between adjacent beams (7), **characterized in that**:
a side surface of the beam (7) in the circumferential direction comprises a first pressure slope (13) and a second pressure slope (15) spaced apart from each other, as well as a recessed surface (12) provided at one or two ends of the pocket (10), and the recessed surface (12) extends from the first pressure slope (13) towards a longitudinal centerline (S) of the beam (7) and towards a longitudinal end of the beam (7).

2. The retainer according to claim 1, **characterized in that** the recessed surface (12) is formed as a dovetail groove extending in an inclined plane from the first pressure slope (13) towards the longitudinal centerline (S) of the beam (7) and towards the longitudinal end of the beam (7).

3. The retainer according to claim 1, **characterized in that** the recessed surface (12) is formed as a rectangular groove that sinks relative to the first pressure slope (13) towards the longitudinal centerline (S) of the beam (7).

4. The retainer according to claim 1, **characterized in that** the side surface further includes a transition slope (18), which extends from the first pressure slope (13) and the second pressure slope (15) in a radial direction of the retainer.

5. The retainer according to claim 1, **characterized in that** the pocket (10) comprises a small end of the pocket and a large end of the pocket, at the small end of the pocket, the side surface comprises the recessed surface (12) extending from the first pressure slope (13) towards the longitudinal centerline (S) of the beam (7) and towards the longitudinal end of the beam (7).

6. The retainer according to any one of claims 1 to 5, **characterized in that** the side surface further comprises a sinking surface (14) located between the first pressure slope (13) and the second pressure slope (15) and recessed relative to the first pressure slope (13) and the second pressure slope (15).

7. The retainer according to any one of claims 1 to 5, **characterized in that** the side surface further comprises a first oil groove surface (11) extending from the recessed surface (12) at one end of the pocket (10), and/or a second oil groove surface (16) extending from the second pressure slope (15) at the other end of the pocket (10).

8. The retainer according to claim 6, **characterized in that** an offset distance (D) between a center (A) of the sinking surface (14) in a longitudinal direction (X) of the beam (7) and a center (B) of the beam (7) in the longitudinal direction (X) is within 20% of a longitudinal length (L) of the beam (7).

9. The retainer according to any one of claims 1 to 5, **characterized in that** a length of the recessed surface (12) in the longitudinal direction (X) of the beam (7) is 1/6 to 1/2 of a longitudinal length (L) of the beam (7).

10. The retainer according to any one of claims 1 to 5, **characterized in that** a length of the first pressure slope (13) and/or the second pressure slope (15) in the longitudinal direction (X) of the beam (7) is greater than 1/6 of a longitudinal length (L) of the beam (7).

11. The retainer according to any one of claims 1 to 5, **characterized in that** the retainer is an integrally formed retainer.

12. A bearing comprising an outer ring (1), an inner ring (3), and a retainer according to any one of claims 1 to 11, wherein the retainer is configured to hold a rolling element (4) located between the inner ring (3) and the outer ring (1).

13. The bearing according to claim 12, **characterized in that** the bearing is a single row tapered-roller bearing.
